Europäisches Patentamt

European Patent Office

Office européen des brevets

(19)

(11) **EP 1 046 142 B1**

(12) **EUROPÄISCHE PATENTSCHRIFT**

(45) Veröffentlichungstag und Bekanntmachung des Hinweises auf die Patenterteilung:
**16.11.2005   Patentblatt 2005/46**

(21) Anmeldenummer: **99947401.8**

(22) Anmeldetag: **21.09.1999**

(51) Int Cl.⁷: **G07F 7/10**, G06F 1/00, G06K 19/073

(86) Internationale Anmeldenummer:
**PCT/EP1999/007026**

(87) Internationale Veröffentlichungsnummer:
**WO 2000/019386 (06.04.2000 Gazette 2000/14)**

(54) **DATENVERARBEITUNGSEINRICHTUNG UND VERFAHREN ZU DESSEN BETRIEB ZUM VERHINDERN EINER DIFFERENTIELLEN STROMVERBRAUCHANALYSE**

DATA PROCESSING DEVICE AND METHOD FOR OPERATING SAME WHICH PREVENTS A DIFFERENTIAL CURRENT CONSUMPTION ANALYSIS

DISPOSITIF DE TRAITEMENT DES DONNEES ET SON PROCEDE DE FONCTIONNEMENT PERMETTANT D'EMPECHER TOUTE ANALYSE DIFFERENTIELLE DE CONSOMMATION D'ENERGIE

(84) Benannte Vertragsstaaten:
**AT DE FR GB**

(30) Priorität: **30.09.1998   DE 19844992**
**05.08.1999   DE 19936939**

(43) Veröffentlichungstag der Anmeldung:
**25.10.2000   Patentblatt 2000/43**

(73) Patentinhaber:
• **Koninklijke Philips Electronics N.V.**
**5621 BA Eindhoven (NL)**
Benannte Vertragsstaaten:
**AT FR GB**
• **Philips Intellectual Property & Standards GmbH**
**20099 Hamburg (DE)**
Benannte Vertragsstaaten:
**DE**

(72) Erfinder: **FEUSER, Markus**
**NL-5656 AA Eindhoven (NL)**

(74) Vertreter: **Peters, Carl Heinrich**
**Philips Intellectual Property & Standards GmbH,**
**Postfach 50 04 42**
**52088 Aachen (DE)**

(56) Entgegenhaltungen:
**FR-A- 2 745 924          US-A- 4 932 053**

**Beschreibung**

Die Erfindung betrifft ein Verfahren zum Betreiben einer Datenverarbeitungseinrichtung, insbesondere einer Chipkarte, mit einer integrierten Schaltung, welche in Abhängigkeit von einem Taktsignal Rechenoperationen, insbesondere kryptographische Operationen, Datenein- bzw. -ausgaben sowie eine Datenübergabe zwischen Registern der integrierten Schaltung ausführt, gemäß dem Oberbegriff des Anspruchs 1. Die Erfindung betrifft ferner eine Datenverarbeitungseinrichtung, insbesondere Chipkarte, insbesondere zum Ausführen des Verfahrens, mit einer integrierten Schaltung, welche in Abhängigkeit von einem Taktsignal Rechenoperationen, insbesondere kryptographische Operationen, ausführt, wobei die integrierte Schaltung ein Rechenwerk mit zugeordnetem ersten Register und Datenein- und -ausgängen aufweist, gemäß dem Oberbegriff des Anspruchs 3.

In vielen Datenverarbeitungsgeräten mit integrierter Schaltung dienen beispielsweise kryptographische Operationen zum Schutz des Betriebes dieser Geräte bzw. zum Schutz von in dem Gerät transportierten Daten. Die hierfür notwendigen Rechenoperationen werden dabei sowohl von Standard-Rechenwerken als auch von dedizierten Crypto-Rechenwerken durchgeführt. Ein typisches Beispiel für letzteres sind Chipkarten bzw. IC-Karten. Bei in diesem Zusammenhang verwendeten Daten bzw. Zwischenergebnissen handelt es sich üblicherweise um sicherheitsrelevante Informationen, wie beispielsweise kryptographische Schlüssel oder Operanden.

Bei von der integrierten Schaltung durchgeführten Rechenoperationen, beispielsweise zur Berechnung von kryptographischen Algorithmen, werden logische Verknüpfungen zwischen Operanden bzw. Zwischenergebnissen durchgeführt. In Abhängigkeit von der verwendeten Technologie führen diese Operationen, insbesondere das Laden von leeren oder zuvor gelöschten Speicherbereichen bzw. Register mit Daten, zu einem erhöhten Stromverbrauch der Datenverarbeitungsgeräte. Bei komplementärer Logik, wie beispielsweise der CMOS-Technik, tritt ein erhöhter Stromverbrauch dann auf, wenn der Wert einer Bit-Speicherzelle geändert wird, d.h. sein Wert sich von "0" auf "1" bzw. von "1" auf "0" ändert. Der erhöhte Verbrauch hängt dabei von der Anzahl der im Speicher bzw. Register geänderten Bitstellen ab. Mit anderen Worten lässt das Laden eines zuvor gelöschten Registers einen Stromverbrauch proportional zum Hamminggewicht des in das leere Register geschriebenen Operanden (=Anzahl der Bits mit dem Wert "1") ansteigen. Durch eine entsprechende Analyse dieser Stromänderung könnte es möglich sein, Informationen über die berechneten Operationen zu extrahieren, so dass eine erfolgreiche Kryptoanalyse von geheimen Operanden, wie beispielsweise kryptographischen Schlüsseln, möglich ist. Mittels Durchführung mehrerer Strommessungen am Datenverarbeitungsgerät könnten beispielsweise bei sehr kleinen Signaländerungen eine hinreichende Extraktion der Informationen ermöglicht werden. Andererseits könnten mehrere Strommessungen eine ggf. erforderliche Differenzbildung ermöglichen. Diese Art der Kryptoanalyse wird auch als "Differential Power Analysis" bezeichnet, mittels derer ein Außenstehender durch reine Beobachtung von Änderungen des Stromverbrauches des Datenverarbeitungsgerätes eine ggf. unberechtigte Kryptoanalyse der kryptographischen Operationen, Algorithmen, Operanden bzw. Daten erfolgreich ausführen kann. Die "Differential Power Analysis" ermöglicht somit über eine reine Funktionalität hinaus zusätzliche interne Informationen einer integrierten Schaltung gewinnen zu können.

Aus der US 5 297 201 ist es bekannt, einen Hochfrequenz abstrahlenden Computer mit einer Einrichtung zu kombinieren, welche ebenfalls eine Hochfrequenz ähnlich zu derjenigen des Computers abstrahlt. Dadurch ist es für einen unberechtigten Dritten nicht mehr möglich, die Hochfrequenzabstrahlung des Computers zu dekodieren. Eine Kryptoanalyse durch einen Dritten, der unmittelbar Zugang zum Computer hat, kann dieses System jedoch nicht verhindern.

Die WO 90/15489 beschreibt ein gesichertes Kommunikationssystem, bei dem Dummyverkehr bzw. -übertragungen erzeugt werden, um kryptographische Analysen zu erschweren. Eine Kryptoanalyse durch einen Dritten, der unmittelbar Zugang zum Computer hat, kann dieses System jedoch ebenfalls nicht verhindert werden.

FR-A-2 745 924 und US-A-4 932 053 offenbaren Schaltungen, die durch pseudo-zufällige Sequenzen von Operationen Stromverbrauch simulieren, um eine Kryptoanalyse zu vermeiden.

Es ist Aufgabe der vorliegenden Erfindung, ein verbessertes Verfahren und eine verbesserte Datenverarbeitungseinrichtung der obengenannten Art zur Verfügung zu stellen, welche die obengenannten Nachteile beseitigen und einen wirksamen Schutz gegen eine "Differential Power Analysis" zur Verfügung stellen.

Diese Aufgabe wird durch ein Verfahren der o. g. Art mit den in Anspruch 1 gekennzeichneten Merkmalen und durch eine Datenverarbeitungseinrichtung der o.g. Art mit den in Anspruch 3 gekennzeichneten Merkmalen gelöst.

Dazu ist es bei dem Verfahren der o.g. Art erfindungsgemäß vorgesehen, dass die integrierte Schaltung derart gesteuert wird, dass das Ausführen von Rechenoperationen einerseits und die Datenein-/-ausgabe sowie die Datenübergabe von Register zu Register bzw. zwischen Registern andererseits zeitlich parallel durchgeführt wird.

Dies hat den Vorteil, dass für eine "Differential Power Analysis" Anhaltspunkte dafür fehlen, wann eine Rechenoperation endet bzw. wann ein Auslesen/Beschreiben von Registern oder wann eine Datenein-/-ausgabe erfolgt, da Zeitbereiche sowohl der eigentlichen Berechnungen als auch der Datenein- und Datenausgabe verschleiert werden. Die "Differential Power Analysis" wird somit erheblich erschwert, da von außen nicht mehr festgestellt werden kann, ob eine wirkliche Berechnung oder eine Ein-/Ausgabe stattfindet.

In einer vorteilhaften Weiterbildung des Verfahrens werden zum weiteren Verschleiern der Rechenoperationen sowie Datenein-/Ausgaben unmittelbar vor, während und/oder unmittelbar nach der Datenübergabe zwischen den Registern der integrierten Schaltung Dummyberechnungen von einem Rechenwerk der integrierten Schaltung ausgeführt, welche zufällige oder vorbestimmte Daten bearbeiten, wobei keine Daten in Register der integrierten Schaltung geschrieben werden.

Bei einer Datenverarbeitungseinrichtung der o.g. Art ist es erfindungsgemäß vorgesehen, dass ein mit dem ersten Register verbundenes zweites Register vorgesehen ist, welches die Datenein- und -ausgänge aufweist, wobei ferner eine Steuereinheit mit der integrierten Schaltung verbunden ist, welche derart ausgebildet ist, dass sie einen zeitlich parallelen Betrieb der Register zur Datenein-/-ausgabe und Datenübergabe zwischen den Registern einerseits und Rechenoperationen der Recheneinheit andererseits steuert.

Dies hat den Vorteil, dass für eine "Differential Power Analysis" Anhaltspunkte dafür fehlen, wann eine Rechenoperation endet bzw. wann ein Auslesen/Beschreiben von Registern oder wann eine Datenein-/-ausgabe erfolgt, da Zeitbereiche sowohl der eigentlichen Berechnungen als auch der Datenein- und Datenausgabe verschleiert werden. Durch das zweite Register ist eine Ein-/Ausgabe von Daten möglich, während das Rechenwerk aktiv ist und ggf. Daten in das erste Register schreibt oder Daten aus dem ersten Register ausliest. Die "Differential Power Analysis" wird somit erheblich erschwert, da von außen bei geeigneter Ansteuerung des zweiten Registers nicht mehr festgestellt werden kann, ob eine wirkliche Berechnung oder eine Ein-/Ausgabe stattfindet.

In einer vorteilhaften Weitergestaltungen der Datenverarbeitungseinrichtung ist das erste Register ein Operandenregister des Rechenwerkes und/oder das zweite Register ein Operandenregister der Datenein-/-ausgabe.

Nachstehend wird die Erfindung anhand der beigefügten Zeichnungen näher erläutert. Diese zeigen in

Fig. 1 ein Blockschaltbild einer bevorzugten Ausführungsform einer erfindungsgemäßen Datenverarbeitungseinrichtung,
Fig. 2 ein Blockschaltbild einer integrierten Schaltung der Datenverarbeitungseinrichtung von Fig. 1,
Fig. 3 eine graphische Veranschaulichung der Aktivität der erfindungsgemäßen Datenverarbeitungseinrichtung über die Zeit gemäß dem Stand der Technik und

Fig. 4 eine graphische Veranschaulichung der Aktivität der erfindungsgemäßen Datenverarbeitungseinrichtung über die Zeit gemäß der Erfindung.

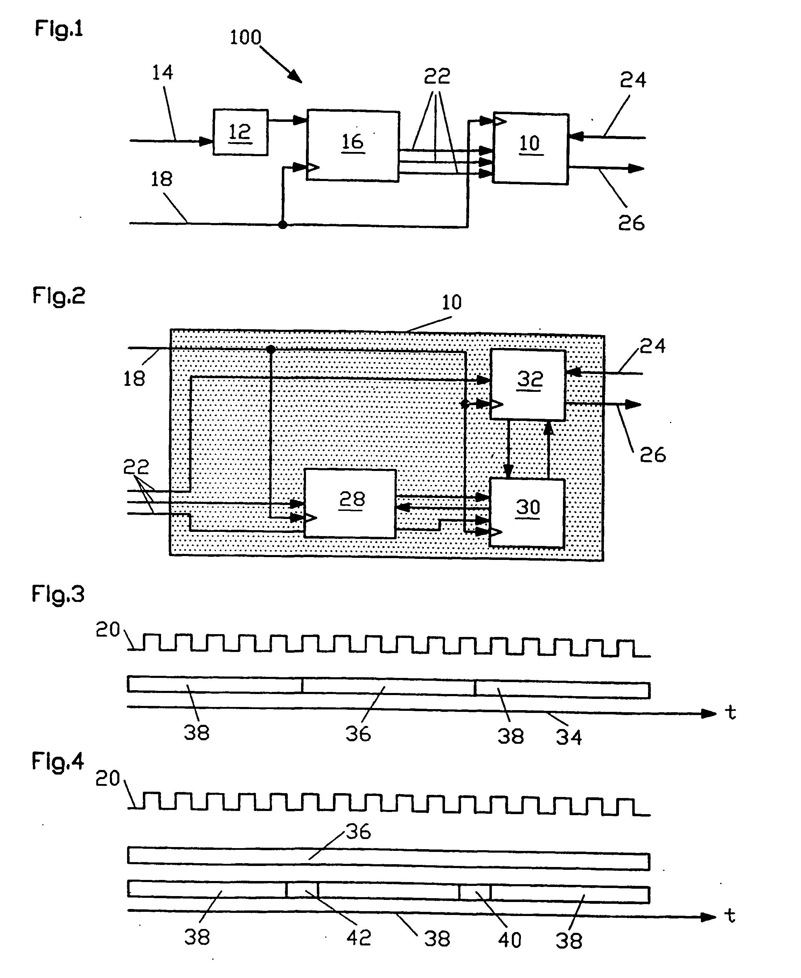

Fig. 1 zeigt eine bevorzugte Ausführungsform einer erfindungsgemäßen Datenverarbeitungseinrichtung 100 mit einer integrierten Schaltung 10, einem Register 12 mit Programmzugriff 14 und einer Steuereinheit 16. Über Leitung 18 erhält die Steuereinheit 16 sowie die integrierte Schaltung ein in Fig. 3 und 4 dargestelltes Taktsignal 20. Über Steuerleitungen 22 steuert die Steuereinheit 16 die integrierte Schaltung 10, die Dateneingänge 24 und Datenausgänge 26 aufweist.

Wie aus Fig. 2 ersichtlich ist umfasst die integrierte Schaltung 10 ein Rechenwerk 28, ein dem Rechenwerk 28 zugeordnetes erstes Operandenregister 30 und ein mit dem ersten Operandenregister 30 verbundenes zweites Operandenregister 32. Die Dateneingänge 24 und Datenausgänge 26 sind am zweiten Operandenregister 32 angeordnet. Das Taktsignal 20 (Fig. 3 und 4) wird über die Leitung 18 sowohl an das Rechenwerk 28 als auch an die beiden Operandenregister 30 und 32 weitergeleitet. Bei Ausführung von Berechnungen bzw. Operationen durch das Rechenwerk 28 liest dieses aus dem ersten Register 30 Daten aus bzw. schreibt ein Ergebnis einer Berechnung in das erste Register 30 ein. Zwischen den Registern 30 und 32 erfolgt ein entsprechender Datenaustausch bzw. eine gegenseitige Datenübergabe, nachfolgend als R2-1 bezeichnet, wenn Daten von dem zweiten Register 32 an das erste Register 30 übergeben werden, bzw. als R1-2 bezeichnet, wenn Daten von dem ersten Register 30 an das zweite Register 32 übergeben werden. Eine der von der Steuereinheit 16 kommenden Steuerleitung 22 ist mit dem zweiten Register 32 zu dessen Steuerung verbunden, während eine andere Steuerleitung 22 mit dem ersten Register 30 zu dessen Steuerung verbunden ist.

Eine von Paul Kocher im Internet unter http://www.cryptography.com/dpa veröffentlichte "Differential Power Analysis" hat den Ansatz, dass neben den Ein/Ausgangssignalen zusätzlich eine Stromaufnahme $I_a$ bzw. Spannungseinbrüche $\Delta U_a$ einer Versorgungsspannung $U_a$ der integrierten Schaltung analysiert werden. Der Erfolg dieser Analysemethode hängt davon ab, ob man eine Anzahl $N_A$ von analogen ($I_a(t)$ oder $\Delta U_a(t)$) Signalverläufen $S(k,t)$ über die Zeit mit $k=\{1,...N_A\}$ unterschiedlichen Operanden derart aufnehmen kann, dass eine Summenbildung der Form

$$T(i,t) = \sum_{k=1}^{N_A} p(i,k) \cdot S(k,t)$$

mit den Koeffizienten $p(i,k)$ mit $i=\{0,1,2,...\}$ möglich ist. Betrachtet man unterschiedliche Signalverläufe $S(k_1, t_1)$, $S(k_2,t_1)$, $S(k_3,t_1)...$ zum gleichen Zeitpunkt $t=t_1$, kann

eine "Differential Power Analysis" nur funktionieren, wenn die integrierte Schaltung in diesem Moment die gleiche Rechenoperation mit unterschiedlichen Operanden k={1,...,N$_A$} ausführt, d.h. die Signalverläufe S(k,t) müssen genau übereinandergelegt werden können. Dieses gilt nicht nur für die Berechnung selbst, sondern auch für die Ein- und Ausgabe von Daten.

Die Erfindung verschleiert sowohl die Zeitbereiche, der eigentlichen Berechnung als auch die Zeitbereiche der Datenein- bzw. Datenausgabe. Bei geeigneter Ansteuerung des zweiten Registers 32 kann von außen nicht mehr festgestellt werden, wann eine wirkliche Berechnung oder eine Ein-/Ausgabe stattfindet. Die "Differential Power Analysis" wird somit erheblich erschwert. Die integrierte Schaltung 10 ist erfindungsgemäß mit den beiden Operandenregistern 30 und 32 ausgestattet. Diese erlauben eine Ein- und Ausgabe von Daten über das zweite Operandenregister 32 mit dessen Dateneingängen 24 und Datenausgängen 26 auch während das Rechenwerk 28 unter Nutzung des ersten Operandenregisters 30 aktiv ist und Berechnungen bzw. Operationen ausführt.

Fig. 4 veranschaulicht eine Betriebsweise der erfindungsgemäßen Datenverarbeitungseinrichtung 100, wobei über eine Zeitachse 34 das Taktsignal 20 und ein Betriebszustand von Rechenwerk bzw. Operandenregistern angegeben ist. Hierbei bezeichnet 36 einen Betriebszustand, bei dem das Rechenwerk eine Berechnung ausführt. Mit 38 ist ein Betriebszustand bezeichnet, bei dem eine Datenein- bzw. Datenausgabe stattfindet, mit 40 ist ein Betriebszustand bezeichnet, bei dem eine Datenübergabe R1-2 stattfindet und mit 42 ist ein Betriebszustand bezeichnet, bei dem eine Datenübergabe R2-1 stattfindet.

Fig. 3 veranschaulicht in einer zu Fig. 3 analogen Darstellung zum Vergleich eine Betriebsweise einer herkömmlichen Datenverarbeitungseinrichtung. Hier sind die Ein- bzw. Ausgabephasen 38 der eigentlichen Berechnung 36 zeitlich vor- bzw. nachgeschaltet. Bei der "Differential Power Analysis" können die Phasen der Berechnungen 36 und der Ein-/Asgabe 38 leicht identifiziert werden, insbesondere welche Eingaben 38 bei einer Berechnung 40 Verwendung finden und welche Ausgaben 38 die Folge sind.

Bei der in Fig. 4 dargestellten, erfindungsgemäßen Betriebsweise werden mittels der Steuereinheit 16 die Berechnungen 36 sowie die Datenein-/-ausgaben 38, 40, 42 dadurch verschleiert, dass der Datenfluss der beiden Operandenregister 30, 32 zeitlich parallel zu den Berechnungen 36 gesteuert wird. Berechnungen 36 finden immer statt. Ob aber eine Berechnung 40 von der Eingabe 38 abhängt oder eine Ausgabe 38 liefert, wird durch die Kopieraktionen R1-2 40 und R2-142 bestimmt. Die Berechnungen vor R2-142 bzw. nach R1-2 40 sind beispielsweise Dummyberechnungen. Dummyrechenoperationen sind solche Rechenoperationen, welche vorbestimmte oder zufällig gewählte Eingangsdaten bearbeiten, wobei das Ergebnis verworfen wird und nicht in die Ergebnisse bzw. Eingangsdaten der wirklichen Rechenoperationen eingehen. Zusätzliche Dummyein-/-ausgaben sind ferner optional vorgesehen. Sowohl die Dummyberechnungen als auch die Dummyeingaben/Dummyausgaben erzeugen Strom- bzw. Spannungsänderungen, welche denen der wirklichen Berechnungen und Ein-/Ausgaben sehr ähnlich sind.

Die erfindungsgemäß zum Schutz der integrierten Schaltungsteile 10 gegen "Differential Power Analysis" vorgesehene Steuereinheit 16 zielt speziell auf die Ein-/Ausgabephasen 38, 40, 42 einer in den integrierten Schaltungsteilen 10 mit Hilfe digitaler, elektronischer Signalverarbeitung durchzuführenden Berechnungen 36 ab, da auch Ein-/Ausgaben anhand des Stromverbrauches mittels der "Differential Power Analysis" analysiert werden könnten. Entsprechend ist bei der "Differential Power Analysis" von Interesse, wann eine Berechnung 36 beginnt oder endet. Genau diese Informationen werden von dem erfindungsgemäßen Verfahren bzw. bei der erfindungsgemäßen Vorrichtung im Stromverbrauchssignal unterdrückt

BEZUGSZEICHNENLISTE:

| 100 | Datenverarbeitungseinrichtung |
|---|---|
| 10 | integrierte Schaltung |
| 12 | Register |
| 14 | Programmzugriff |
| 16 | Steuereinheit |
| 18 | Leitung |
| 20 | Taktsignal |
| 22 | Steuerleitungen |
| 24 | Dateneingänge |
| 26 | Datenaus gänge |
| 28 | Rechenwerk |
| 30 | erstes Operandenregister: R1 |
| 32 | zweites Operandenregister R2 |
| 34 | Zeitachse |
| 36 | Berechnung |
| 38 | Datenein- bzw. Datenausgabe |
| 40 | Datenübergabe R1-2 |
| 42 | Datenübergabe R2-1 |

**Patentansprüche**

1. Verfahren zum Betreiben einer Datenverarbeitungseinrichtung (100), insbesondere einer Chipkarte, mit einer integrierten Schaltung (10), welche in Abhängigkeit von einem Taktsignal Rechenoperationen, insbesondere kryptographische Operationen, Datenein- bzw. -ausgaben (38) sowie eine Datenübergabe (40) von bzw. zu Registern der integrierten Schaltung (10) ausführt, **dadurch gekennzeichnet, dass**

die integrierte Schaltung (10) derart gesteuert wird, dass das Ausführen von Rechenoperationen einerseits und die Datenein-/-ausgabe (38) sowie die Datenübergabe (40) von Register zu Register bzw. zwischen Registern (30,32) andererseits zeitlich parallel durchgeführt wird.

2.  Verfahren nach Anspruch 1,
    **dadurch gekennzeichnet, dass**
    unmittelbar vor, während und/oder unmittelbar nach der Datenübergabe von Register zu Register bzw. zwischen den Registern (30, 32) der integrierten Schaltung Dummyberechnungen von einem Rechenwerk (28) der integrierten Schaltung (10) ausgeführt werden, welche zufällige oder vorbestimmte Daten bearbeiten, wobei keine Daten in Register (30, 32) der integrierten Schaltung geschrieben werden.

3.  Datenverarbeitungseinrichtung (100), insbesondere Chipkarte, insbesondere zum Ausführen eines Verfahrens gemäß wenigstens einem der vorhergehenden Ansprüche, mit einer integrierten Schaltung (10), welche in Abhängigkeit von einem Taktsignal (20) Rechenoperationen, insbesondere kryptographische Operationen, ausführt, wobei die integrierte Schaltung (10) ein Rechenwerk (28) mit zugeordnetem ersten Register (30) und Datenein- und -ausgänge (24, 26) aufweist,
    **dadurch gekennzeichnet, dass**
    ein mit dem ersten Register (30) verbundenes zweites Register (32) vorgesehen ist, welches die Datenein- und -ausgänge (24, 26) aufweist, wobei ferner eine Steuereinheit (16) mit der integrierten Schaltung (10) verbunden ist, welche derart ausgebildet ist, dass sie einen zeitlich parallelen Betrieb der Register (30, 32) zur Datenein-/-ausgabe (38) und Datenübergabe (40) von Register zu Register bzw. zwischen den Registern (30, 32) einerseits und Rechenoperationen (40) der Recheneinheit (28) andererseits steuert.

4.  Datenverarbeitungseinrichtung (100) nach Anspruch 3,
    **dadurch gekennzeichnet, dass**
    das erste Register (30) ein Operandenregister des Rechenwerkes (28) und/oder das zweite Register (32) ein Operandenregister der Datenein-/-ausgabe (38) ist.

## Claims

1.  A method of operating a data processing device (100), notably a chip card, which includes an integrated circuit (10) which carries out, in dependence on a clock signal, arithmetic operations, notably cryptographic operations, data input and data output (38) as well as data transfer (40) from and to registers of the integrated circuit (10), **characterized in that** the integrated circuit (10) is controlled in such a manner that the execution of arithmetic operations, on the one hand, and the data input/output (38) as well as the data transfer (40) from one register to another or between registers (30, 32), on the other, is executed in parallel with time.

2.  A method as claimed in claim 1, **characterized in that** directly before, during and/or directly after the data transfer from one register to another or between the registers (30, 32) of the integrated circuit, a processor (28) of the integrated circuit (10) executes dummy calculations which act on random or predetermined data, no data being written into registers (30, 32) of the integrated circuit.

3.  A data processing device (100), notably a chip card, which is specifically intended to carry out a method as claimed in at least one of the preceding claims, and includes an integrated circuit (10) which executes arithmetic operations, notably cryptographic operations, in dependence on a clock signal (20), the integrated circuit (10) including a processor (28) with an associated first register (30) and data inputs and outputs (24, 26), **characterized in that** a second register (32) is connected to the first register (30) and is provided with the data inputs and outputs (24, 26), a control unit (16) being connected to the integrated circuit (10) and being constructed in such a manner that it controls a parallel operation in time of the registers (30, 32) for data input/output (38) and data transfer (40) from register to register or between the registers (30, 32), on the one hand, and arithmetic operations (40) of the processor (28), on the other.

4.  A data processing device (100) as claimed in claim 3, **characterized in that** the first register (30) is an operand register of the processor (28) and/or the second register (32) is an operand register for the data input/output (38).

## Revendications

1.  Procédé pour faire fonctionner un dispositif de traitement de données (100), en particulier une carte à puce, comprenant un circuit intégré (10) qui effectue, en fonction d'un signal d'horloge, des opérations de calcul, en particulier des opérations cryptographiques, des entrées ou des sorties de données (38) ainsi qu'un transfert de données (40) à partir ou encore vers des registres du circuit intégré (10),
    **caractérisé en ce que**
    le circuit intégré (10) est piloté de telle manière que l'exécution d'opérations de calcul, d'une part, et l'entrée / la sortie de données (38) ainsi que le transfert de données (40) de registre à registre ou encore entre les registres (30, 32), d'autre part, soient effectuées parallèlement dans le temps.

2. Procédé selon la revendication 1
**caractérisé en ce que**
immédiatement avant, pendant et / ou immédiatement après le transfert de données de registre à registre ou encore entre les registres (30, 32) du circuit intégré, des calculs factices sont effectués par une unité de calcul (28) du circuit intégré (10) qui traite des données aléatoires ou prédéterminées, aucune donnée n'étant écrite dans des registres (30, 32) du circuit intégré.

3. Dispositif de traitement de données (100) en particulier carte à puce, en particulier pour mettre en oeuvre un procédé selon au moins une des revendications précédentes, comprenant un circuit intégré (10) qui effectue, en fonction d'un signal d'horloge, des opérations de calcul, en particulier des opérations cryptographiques, le circuit intégré présentant une unité de calcul (28) avec un premier registre associé et des entrées et des sorties de données (24, 26),
**caractérisé en ce que**
il est prévu un deuxième registre (32) relié au premier registre (30), lequel deuxième registre présente les entrées et les sorties de données (24, 26), une unité de commande (16) étant en outre reliée au circuit intégré (10) laquelle est conformée de manière à commander, d'une part, l'exploitation parallèle des registres (30, 32) pour l'entrée / la sortie de données (38) et le transfert de données (40) de registre à registre ou encore entre les registres (30, 32) et, d'autre part, les opérations de calcul (40) de l'unité de calcul (28).

4. Dispositif de traitement de données (100) selon la revendication 3,
**caractérisé en ce que**
le premier registre (30) est un registre d'opérandes de l'unité de calcul (28) et / ou le deuxième registre (32) est un registre d'opérandes de l'entrée / la sortie de données (38).

Fig.1

Fig.2

Fig.3

Fig.4